# EUROPEAN PATENT APPLICATION

(11) **EP 1 003 118 A1**
(43) Date of publication of application: **24.05.2000**
(21) Application number: 99203859.6
(22) Date of filing: 19.11.1999
(51) Int. Cl.: G06F 17/60

(54) **A method of obtaining information from persons about a particular subject, as well as a method of drawing up a set of questions**

(30) Priority: 20.11.1998 NL 1010621
(71) Applicant: Meyermonitor B.V., 1077 ST Amsterdam (NL)
(72) Inventor: Lachotkzi-Meyer, Maria Elisabeth Theodora, 1077 KD Amsterdam (NL); Lachotkzi, Fred Willy Ido, 1077 KD Amsterdam (NL)
(74) Representative: de Vries, Johannes Hendrik Fokke

(57) **Abstract**

In order to obtain information from persons about a particular subject, questions are put to a number of persons by presenting attributes which are typical of said subject to a person in clusters of two or more connected attributes. Each cluster corresponds with a practical situation. It is possible to indicate for each cluster to what extent said practical situation applies to the subject in question. A description of the associated practical situation has been added to each cluster, in which description the attributes of said cluster are explained by means of a practical example. Said description can be selectively consulted by the person in question.

## Description

The invention relates to a method of obtaining information from persons about a particular subject, wherein questions are put to a number of persons.

Such a method is generally known, it is for example used for gathering information by means of a questionnaire. When reliable information about a subject must be obtained by means of the known method, the persons who participate in the investigation must usually answer a great deal of questions. Thus, it takes up a relatively great deal of time to participate in an investigation by means of the known method In addition, it has become apparent that the information which is obtained by means of the known method may not be very reliable under certain circumstances. The fact is that the person who answers individual questions about a particular subject does not always have a correct image of the situation that might result from the answers he or she is giving. For example, if the study were to relate to the person's own work situation, the question whether a large degree of freedom in the performance of the work would be desirable might well be answered in the affirmative, because the person in question does not realize that a large degree of freedom may also lead to a lack of guidance.

It is an object of the invention to provide a method of the kind referred to in the introduction, wherein information can be obtained more quickly and the information obtained is more reliable.

In order to accomplish this object, the method according to the invention is characterized in that attributes which are typical of the subject are presented to a person in clusters of two or more connected attributes, wherein each cluster corresponds with a practical situation, wherein it is possible to indicate for each cluster to what extent said practical situation applies to the subject in question, wherein a description of the associated practical situation has been added to each cluster, in which description the attributes of said cluster are explained by means of a practical example.

By combining two or more connected attributes in clusters in this manner, the number of questions to be answered by a person is significantly reduced, so that the amount of time which is needed to participate in the investigation will be rather limited. Moreover, the description of a practical example will present the person in question with a clear image of all aspects associated with said practical situation, so that the answer which is given will be more reliable if said description has been consulted.

Preferably, the person in question can selectively consult the description. This is conducive towards the speed with which the questions can be answered.

Preferably, it can be indicated whether the attributes correspond with a desired situation and with the actual or current situation. This makes it possible to investigate by means of the present method to what extent the persons who participate in the study think that the actual situation corresponds with the desired situation. In this manner, a company can gather information about the differences between the desired work situation and the actual work situation, for example, and adapt its policy with regard to the work situation and/or with regard to the persons involved in dependence thereon.

The invention also provides a method of drawing up a set of questions for obtaining information from persons about a particular subject, wherein according to the invention attributes which are typical of the subject are gathered, wherein it is investigated whether the attributes being gathered are connected and the connected attributes are combined in clusters, which each correspond with a practical situation, and wherein a description of a practical situation is added to each cluster, in which description the attributes of said clusters are explained by means of a practical example.

### BRIEF DESCRIPTION OF THE DRAWINGS

Fig. 1 is a block diagram of an exemplary computer environment for practicing and implementing the present invention.

Fig. 2 is a pictorial representation of an organizational structure of a surveying technique of the present invention.

Fig. 3 is a first exemplary screen display.

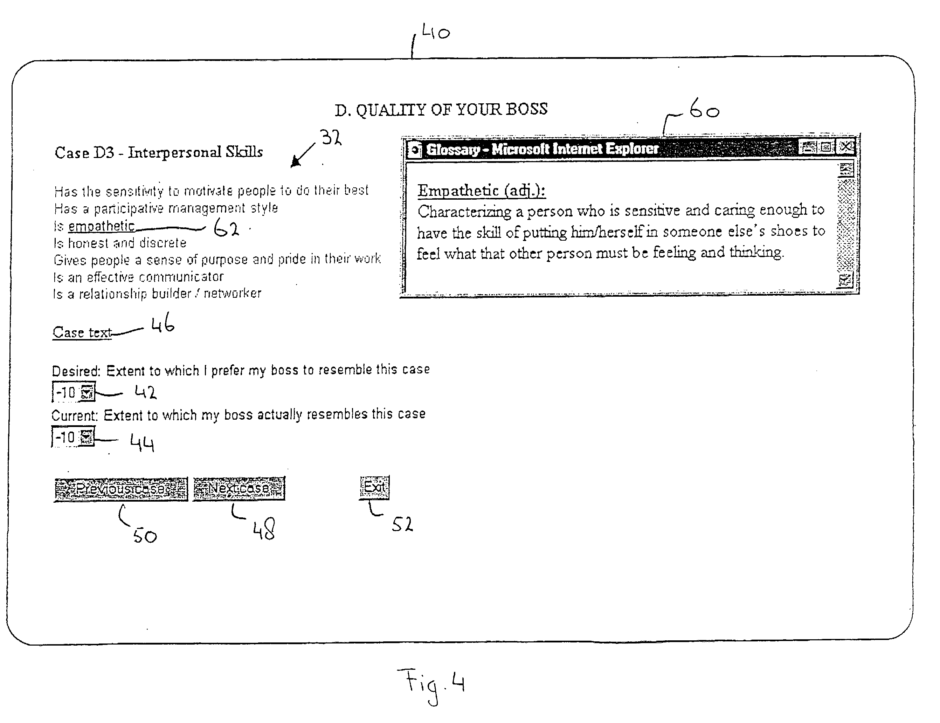

Fig. 4 is a second exemplary screen display.

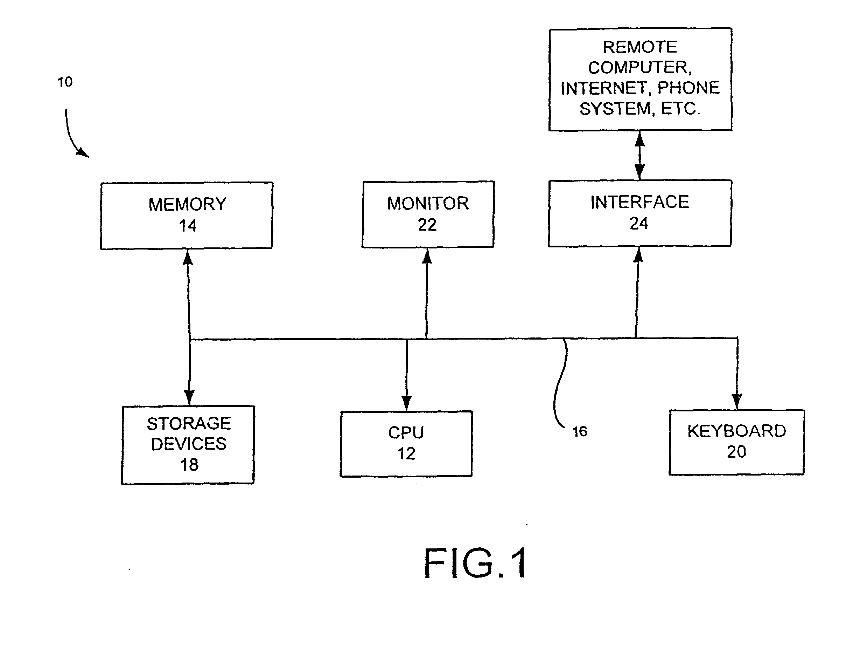

The invention will be explained in more detail hereafter by means of an example for investigating the work situation of employees of a company. Fig. 1 and the related discussion provide a brief, general description of a suitable computing environment in which the invention may be implemented. Although not required, the present invention will be described, at least in part, in the general context of computer-executable instructions, such as program modules, being executed by a computer 10. Generally, program modules include routine programs, objects, components, data structures, etc., which perform particular tasks or implement particular abstract data types. Tasks performed by the program modules are described below and with the aid of block diagram and screen displays. Those skilled in the art can implement the description, block diagrams and screen displays to computer-executable instructions. In addition, those skilled in the art will appreciate that the invention may be practised with other computer system configurations, including multi-processor systems, networked personal computers, mini-computers, main frame computers, and the like. The invention may also be practised in distributed computing environments where tasks are performed by remote processing devices that are linked through a communications network. In a distributed computer environment, program modules and/or data may be located in both local and remote memory storage devices.

The computer 10 illustrated in FIG. 1 comprises a conventional computer having a central processing unit (CPU) 12, memory 14 and a system bus 16, which couples various system components, including the memory 14 to the CPU 12. The system bus 16 may be any of several types of bus structures, including a memory bus or a memory controller, a peripheral bus, a network bus and a local bus using any of a variety of bus architectures. The memory 14 includes read only memory (ROM) and random access memory (RAM). A basic input/output (BIOS) containing the basic routine that helps to transfer information between elements within the computer 10, such as during start-up, is stored in ROM. Storage devices 18, such as a hard disk, a floppy disk drive, an optical disk drive, etc., are coupled to the system bus 16 and are used for storage of program modules and data. It should be appreciated by those skilled in the art that other types of computer readable media that are accessible by a computer, such as magnetic cassettes, flash memory cards, digital video disks, random access memories, read only memories, and the like, may also be used as storage devices. Commonly, programs are loaded into memory 14 from at least one of the storage devices 38 with or without accompanying data.

An input device 20 such as a keyboard, pointing device (mouse), or the like, allows an operator to provide commands to the computer 10. A monitor 22 or other type of output device is further connected to the system bus 16 via a suitable interface and provides feedback to the operator. Computer 10 can communicate to other computers, or a network of computers, such as the Internet through a communications link, and an interface 24, such as a modem. In one embodiment, computer 10 can organize, present and solicit information to and from a person being surveyed through a "Website" commonly used on the Internet. In such a situation, the computer 10 is identified as a server, while remote computers are identified as clients. Remote customers can access the Website using a conventional desktop computer or other Internet device and a browser such as MICROSOFT EXPLORER or NETSCAPE NAVIGATOR.

By means of an investigation among target groups of employees of various companies, a list is drawn up of attributes or characteristics, which are essential for describing the work situation of the target group. In practice it has been determined that a large number of attributes are relevant for describing the work situation. It is possible to determine the connection between various attributes by means of a statistical method of investigation, which is known as factor analysis, which method is known per se.

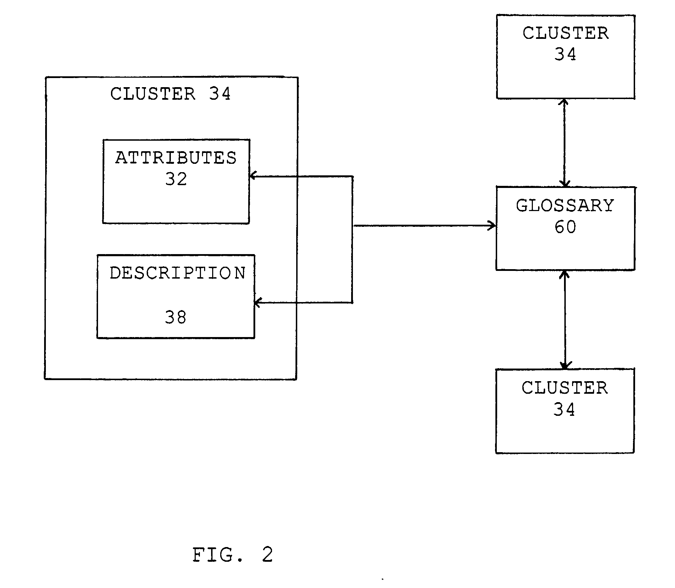

Fig. 2 pictorially illustrates an organization structure 30 used in the present invention. Connected attributes 32 are combined in a plurality of clusters, one of which is illustrated in detail in Fig. 2, and, wherein each cluster 34 of connected attributes 32 is typical of a particular work situation. Research has shown that about 200 attributes are relevant for an adequate description of a work situation, which attributes can be combined into 39 clusters by factor analysis. Furthermore it has become apparent that said clusters, for their part, are connected as well, and that they can be divided into seven main categories, which can be used for an adequate human resources management. The attached Appendix provides each of the seven main categories, which include (A) "Quality of the Company", (B) "Culture of the Organization", (C) "Image of the Organization", (D) "Quality of Your Boss", (E) "Personal Empowerment", (F) "Personal Development" and (G) "Benefits and Rewards". Generally, the attributes 32 and the organization of attributes into clusters 34 can take many forms. In the Appendix, the clusters 34 are designated A1-A6, B1-B6, C1-C5, D1-D5, E1-E6, F1-F5 and G1-G6, with the attributes listed below each cluster designation. It should be noted in this example, the attributes of each cluster can include a group (designated "i") that are presented to each of the participants of the survey, while a second group (designated "ii", which may not be present in all clusters) may not be presented to the participants, but according to factor analysis, correlate with the group "i" attributes in the same cluster. Group "ii" attributes typically are not presented to the participants because they may cause confusion. However, group "ii" attributes can be presented to the company in a subsequent report of survey results so that the company can see all of the attributes and the corresponding survey results.

A description 38 of the work situation is drawn up for each cluster 34 of connected attributes 32, in which description of the attributes 32 of said cluster 34 are explained by means of a practical example. For each cluster 34, there are two questions to answer, wherein it is possible to indicate to what extent the practical situation in question corresponds with the desired situation and to what extent the situation in question corresponds with the actual situation.

The attributes 32 are preferably gathered by carrying out investigations among target groups from various countries. This makes it possible to use the practical situations described by the attributes 32 in various questions, without any adaptations being required. By asking both about the desired situation and about the actual situation, it becomes possible to use the obtained set of questions universally.

The set of questions that has been obtained in this manner is used in the following manner for obtaining information from participants in an investigation into the work situation for the target group in question.

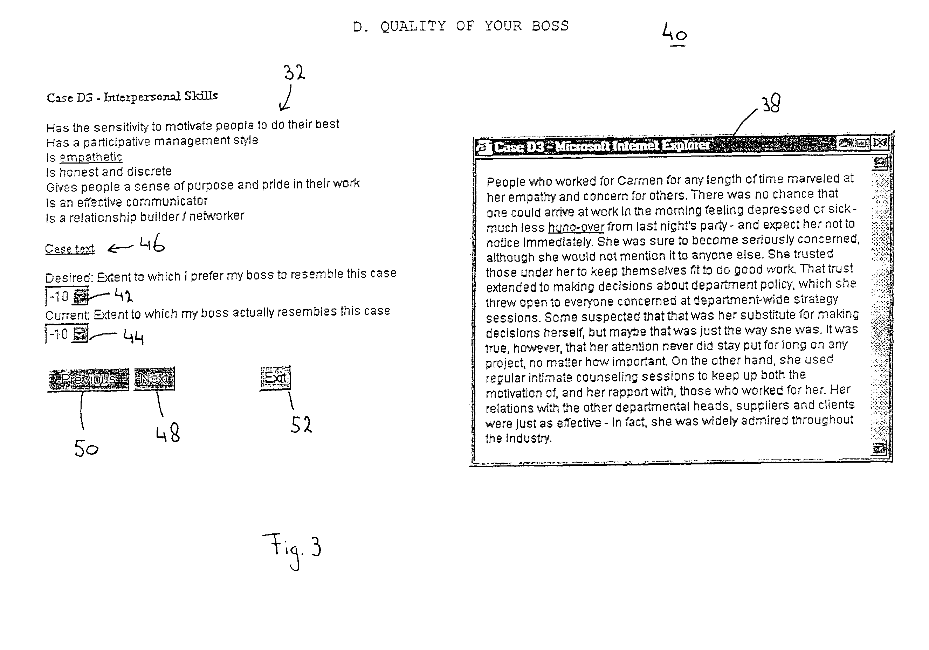

Preferably, the questions are presented to the participants via an Internet or Intranet site. Co-pending application entitled "METHOD FOR MONITORING THE WORKING ENVIRONMENT OF EMPLOYEES OF A COMPANY" having application number , filed on even date herewith, and incorporated herein by reference in its entirety, describes a method and system for surveying employees. Once a connection with the website in question has been made, in a manner known per se, by means of a computer, and the participant has gained access to the questions, for example by inputting an identification code and a password, successive pages, each containing one cluster of connected attributes, are displayed. Fig. 3 illustrates an exemplary page 40. The page 40 includes the attributes 32 of one of the clusters 34 (FIG. 2). The participant can indicate at input box 42 with each cluster to what extent he or she would wish the situation at the company to be similar to the practical situation in question, for example by indicating a score on a scale from -10 to +10. Then the participant can indicate at input box 44 to what extent the practical situation at the company actually corresponds with said practical situation. If the practical situation characterized by the attributes is not quite clear to the participant, he or she can place the respective description 38, in which the attributes 32 are explained by means of a practical example, on the screen by simply clicking on an associated designation 46 on the screen. All aspects of the attributes 32, both positive and negative ones, are described as well as possible in this practical example. Such a designation 46 can be referred to as "select button". Each page 40 furthermore comprises select buttons 48 and 50 for going to a next page or to a preceding page, respectively. The answers that are given are registered in a database as soon as the participant clicks on the next page button 48.

The advantage of giving each participant an identification code and a password is that each participant is presented with a personal questionnaire, which need not be answered in one sitting. A select button 52 can be added to all pages or to a limited number of pages on which the clusters are presented, by means of which buttons the participant can exit the questionnaire. When the participant inputs his identification code and his password again at a later stage, he or she will return to his own questionnaire, preferably to the question (i.e. page) where he stopped the previous time. If desired, the participant can change previous answers as yet.

Furthermore it is preferred to add to every page 40 a select button, which can be clicked on in order to consult a glossary 60 that can be associated with each cluster or generally, as shown(Fig. 1). When the user clicks on said button, only those terms that are used in the description of the attributes or the practical example of the cluster in question, as well as an explanation thereof, will be displayed. Since the glossary 60 will generally comprise an explanation of only a few terms for each page 40, it is according to one preferred embodiment, as illustrated in Fig. 3, also possible to configure each term 62 that is included in the glossary as a "select button", so that the glossary can be consulted by clicking on the word. Those terms present in the glossary 60 can be highlighted or otherwise distinguishable from other text on the page 40.

The following are further examples of clusters of connected attributes, with a description of a practical example 38, which can be consulted by clicking on a designation on the screen as discussed above.

### Example I

### Case - Profit, Innovation and Future Orientation.

### attributes:

Is profit/cash-flow oriented
Has the ability to innovate
Is future-oriented

### practical example:

One thing was certain about the Ganymede company: cash was coming quickly into it, and most of it was operating profit. After all, the business had been initially launched on the strength of a number of "seed clients", after which the client list had continued to grow along with Ganymede's reputation for quality work, so revenue flow was steady. Moreover, the overheads necessary to provide service to these clients were minimal. But the industry was constantly changing with the advance of technology. Ganymede personnel had to stay current and also retain a competitive edge with innovations of their own. Yet the company also needed to maintain its relationships with its clients, particularly the "key accounts", or risk losing them. These two imperatives were always in conflict with each other, and there was never enough personnel to do both sufficiently.

### Example II

### Case - Trust and Support.

### attributes:

Gives recognition of my performance
Shares credits for achievements
Gives a lot of freedom

### practical example:

Eric's subordinates had been hired for their skills, expertise, and long industry experience. They were the experts, so he simply allowed them to get to work on their own. He confined his own role to that of a facilitator, and concentrated on keeping them up-to-date on how the group was doing as a whole. He was especially glad to do so when he could announce impressive group results for the quarter and publicly spread the credit among all his employees. Individual recognition for good results was also important in maintaining morale, so Eric was constantly ready to boast in this way about a single employee's accomplishments as well. Not all of his subordinates enjoyed this freedom, however; some wanted more guidance and checks on their performance to give them direction.

### Example III

### Case - Contribution-based Rewards

### attributes:

Offers cost-control incentives
Offers rewards based on contribution and not on status and job title
Offers a sufficient business trip allowance
Offers opportunities for profit-sharing
Provides me with non-tangible benefits
Offers complete secondary benefits (e.g. insurance, pension, savings)
Offers scholarships to children of employees
Offers excellent expatriate conditions

### practical example:

The Gobsprocket Company knew it had to struggle to attract the personnel it needed from a tight labor market, but managed to succeed through its "participative" employee compensation arrangement. It could base compensation directly upon operating revenue returns (while guaranteeing a minimum level of pay). This arrangement was essentially payment to employees out of profits, with the varying levels of pay based not upon formal job title but on the level of responsibility (and thus the expected results) a given employee upheld within the firm. A healthy byproduct, since pay came out of profits, was the incentive to minimize production costs in order to maximize those profits. The firm also offered part of its compensation as secondary benefits: insurance, pension and saving plans, even scholarships for employee dependents. In addition, employees away on business trips could be assured of a generous travel allowance, and expatriate employees could also look forward to excellent benefits. This was fine and good, but all the offerings on this menu were too much and too complicated for some employees, who would have preferred a simpler formula: stable pay, and as much as possible, in both good and bad times.

The advantage of the method of obtaining information as described above is that a large number of relevant attributes 32 can be investigated by means of a limited number of questions to be answered, so that the time being asked of the participants is limited. Moreover, the addition of a selectively retrievable description 38 of a practical example has the advantage that the participant can obtain an explanation quickly in case he is not sure about the meaning of the attributes 32, wherein the various aspects connected to said attributes 32 are briefly discussed. It has become apparent that the answer constitutes a more reliable reflection of the views of the participants in question.

Preferably, the participants are asked on an annual basis to answer the question to what extent the practical situation as outlined in a cluster corresponds with the situation they consider desirable. In addition to that, the participants are asked one or more times a year to what extent the actual situation corresponds with the outlined practical situation. If the actual situation is investigated several times a year, the previous answers with regard to the desired situation will be presented and can be changed by the participant. In this manner, the company's human resource management is provided with an adequate analysis of the difference between the work situation as desired by the target group in question and the actual situation as it occurs according to the target group in question. On the basis of that, the management can implement a policy and establish by means of the repeated investigation to what extent said policy is effective. Furthermore this makes it possible to analyse differences between company divisions and departments (internal bench marking). When several companies use the method as described, it is also possible to make an analysis of the differences between the respective companies (external bench marking).

The invention is not limited to the embodiment as described above, which can be varied in several ways within the scope of the claims. It will be apparent, for example, that the described method can also be used for investigating other subjects, such as the extent to which clients appreciate the services or the products of a company. Furthermore it is noted that one or more attributes may each be presented in an individual practical situation. Finally it is noted that the term "attribute" as used herein is understood to mean characteristic that is relevant for the subject in question.

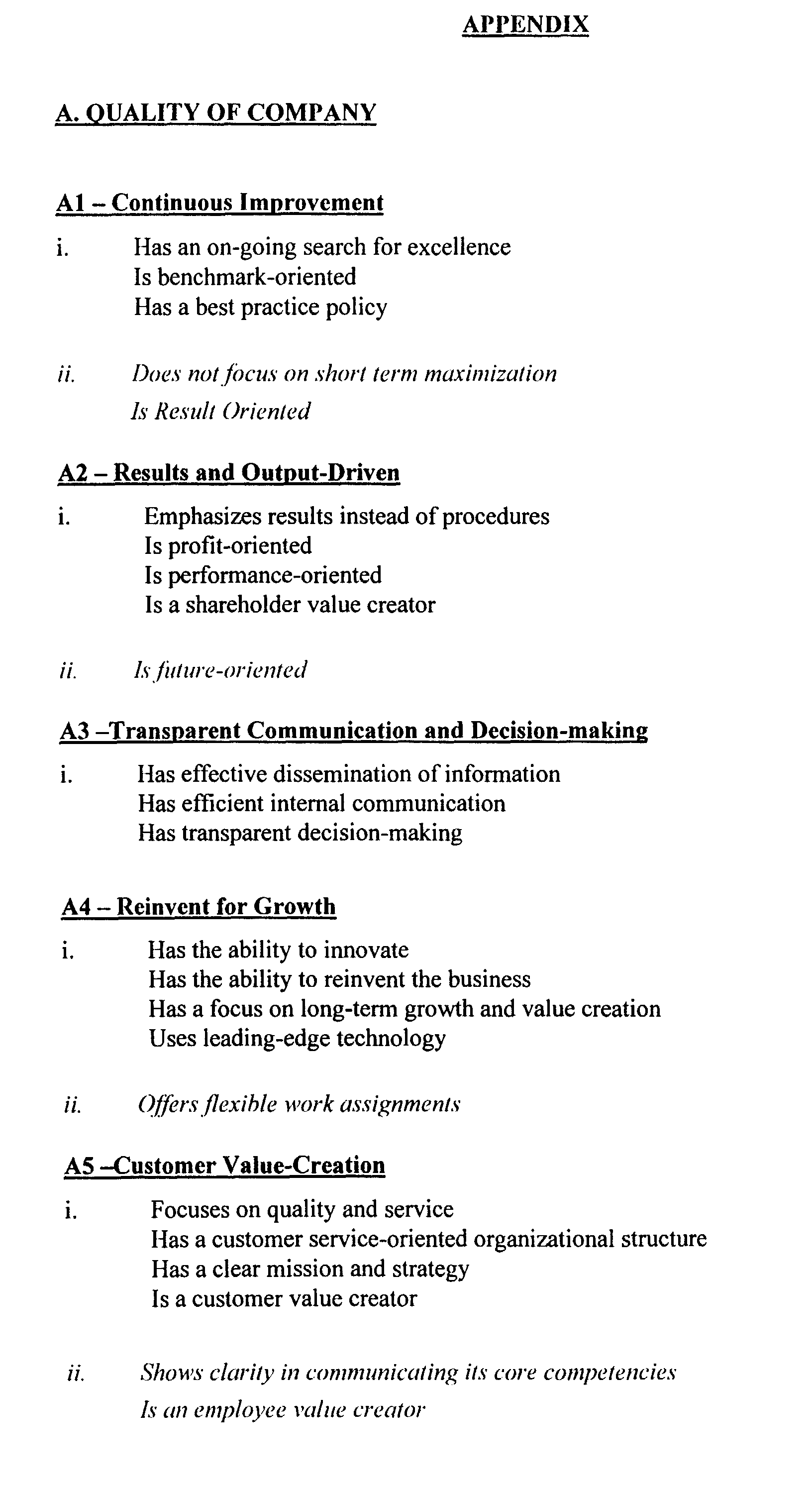

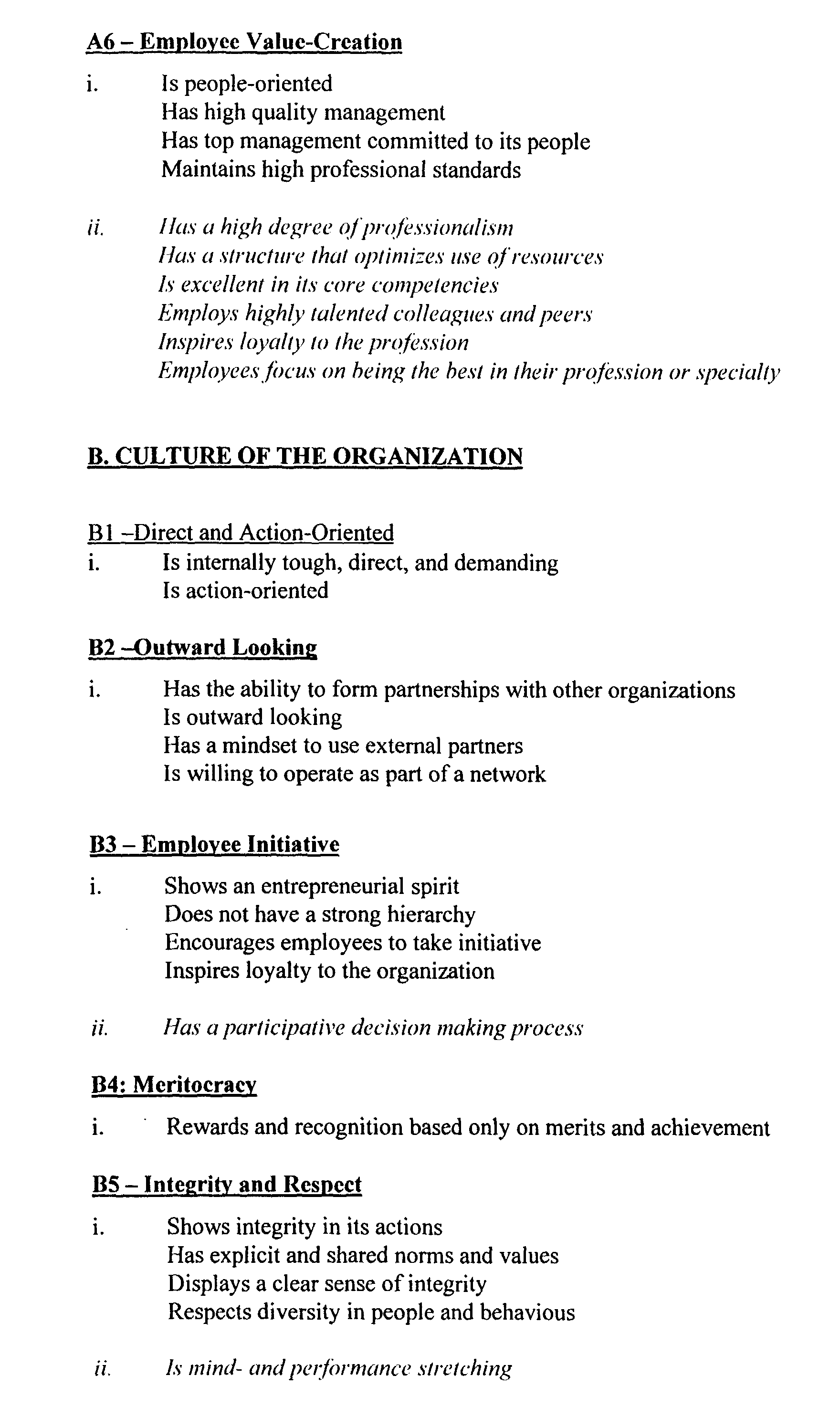

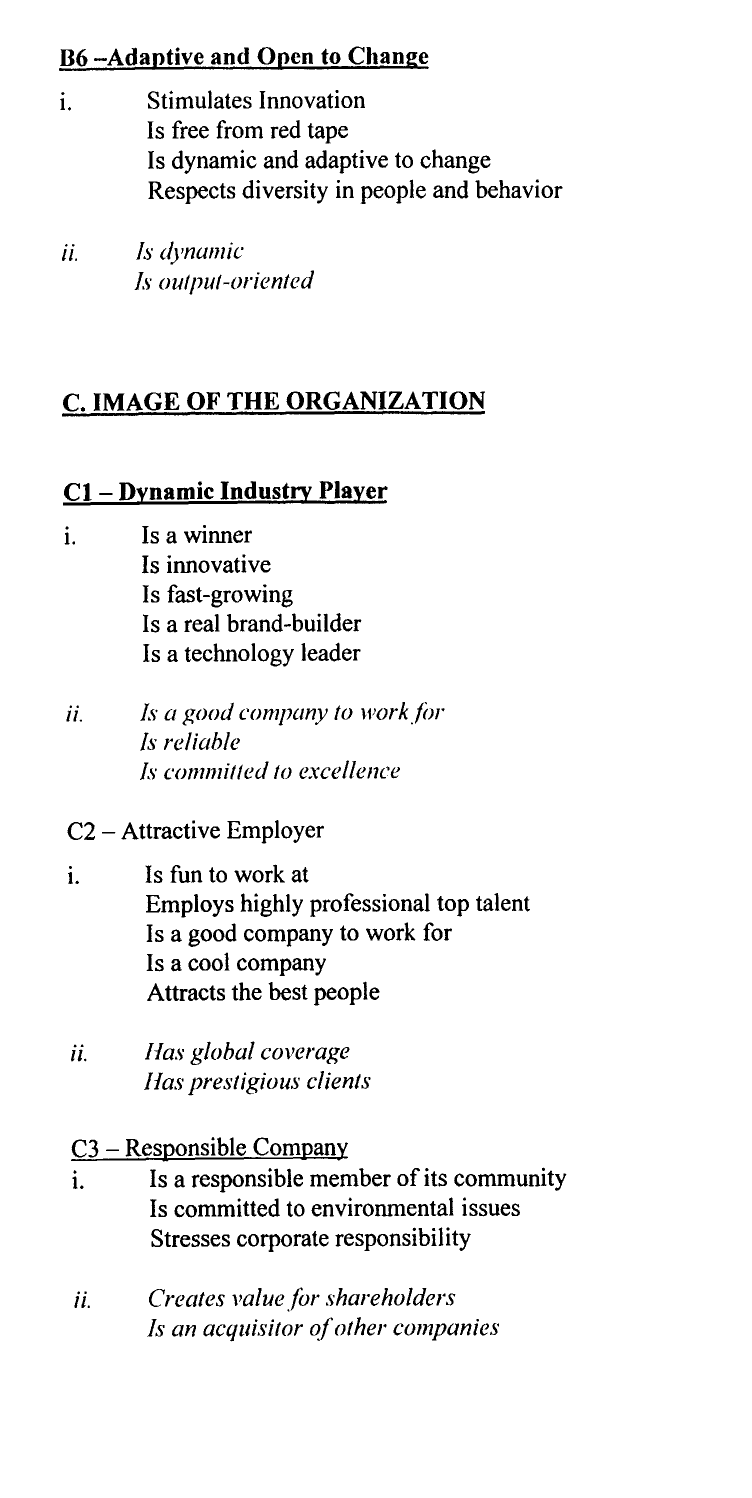

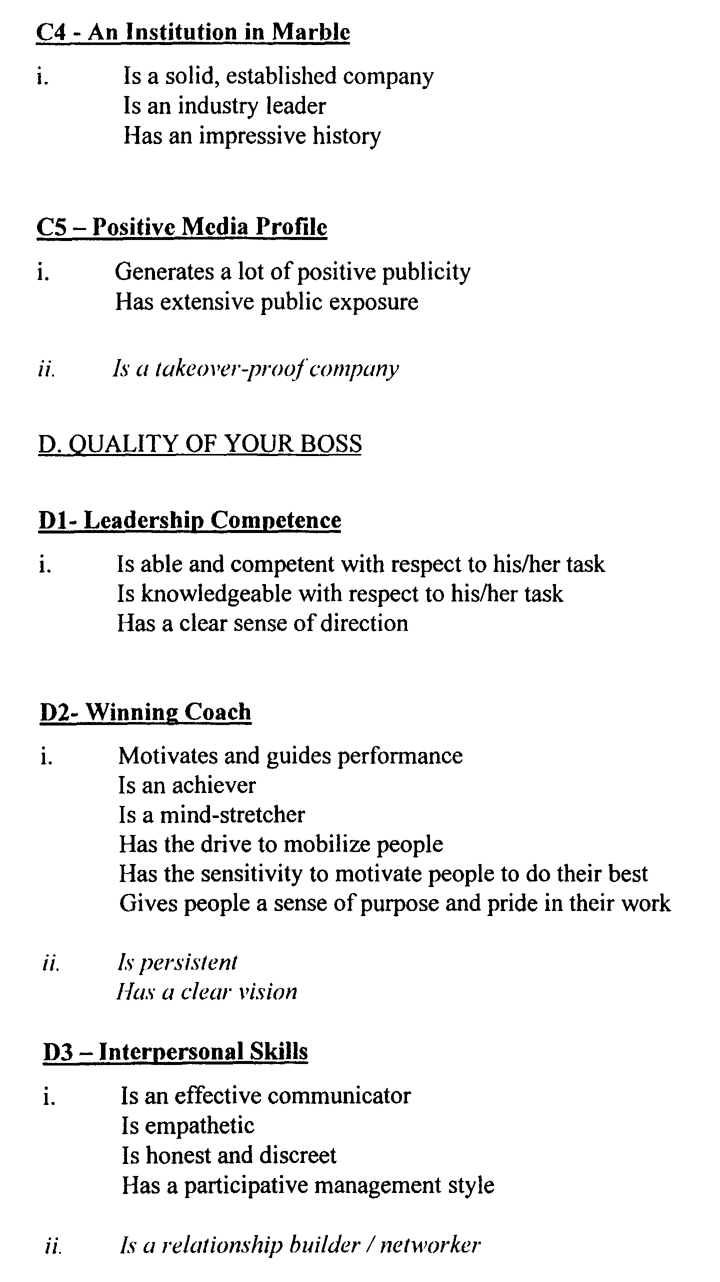

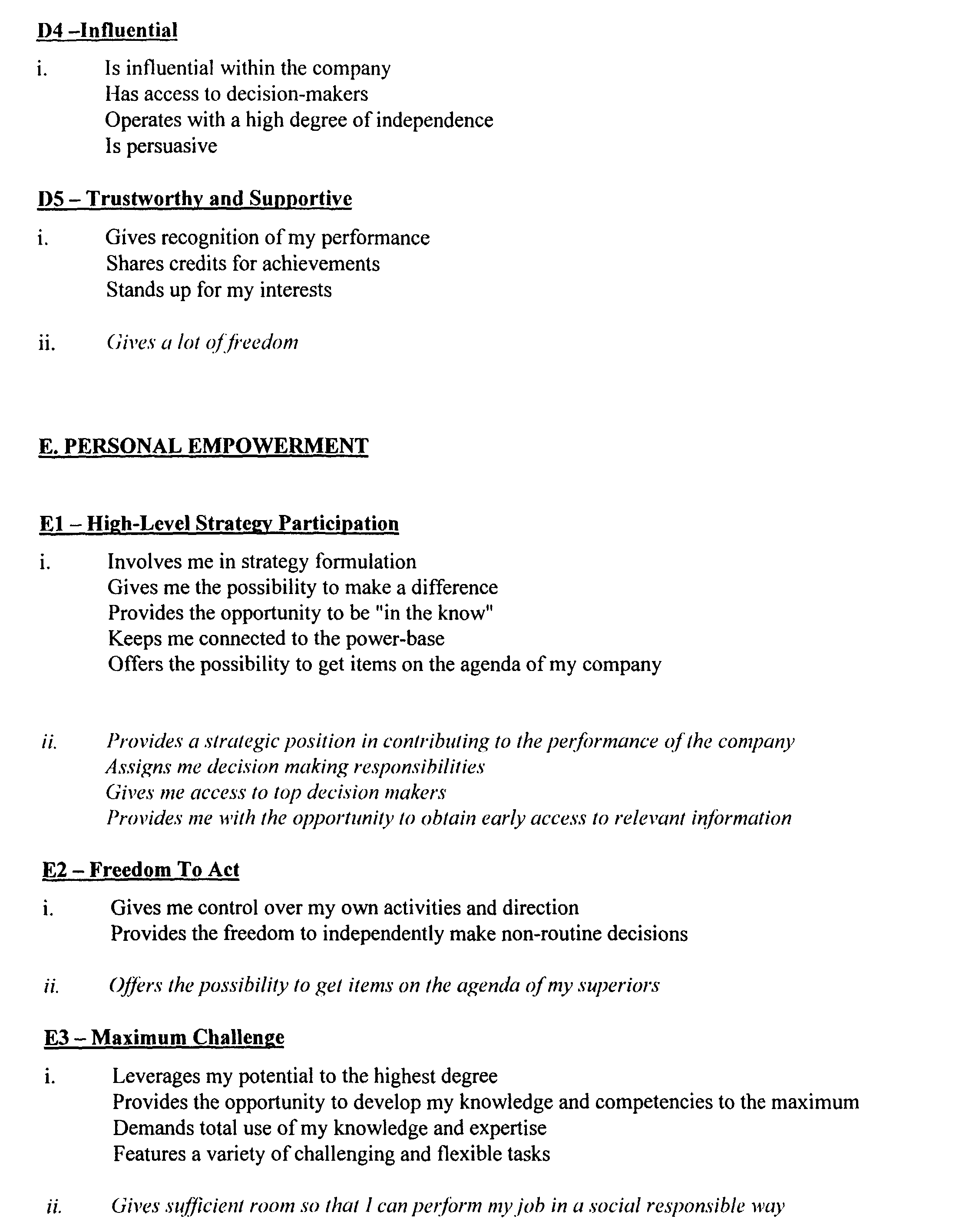

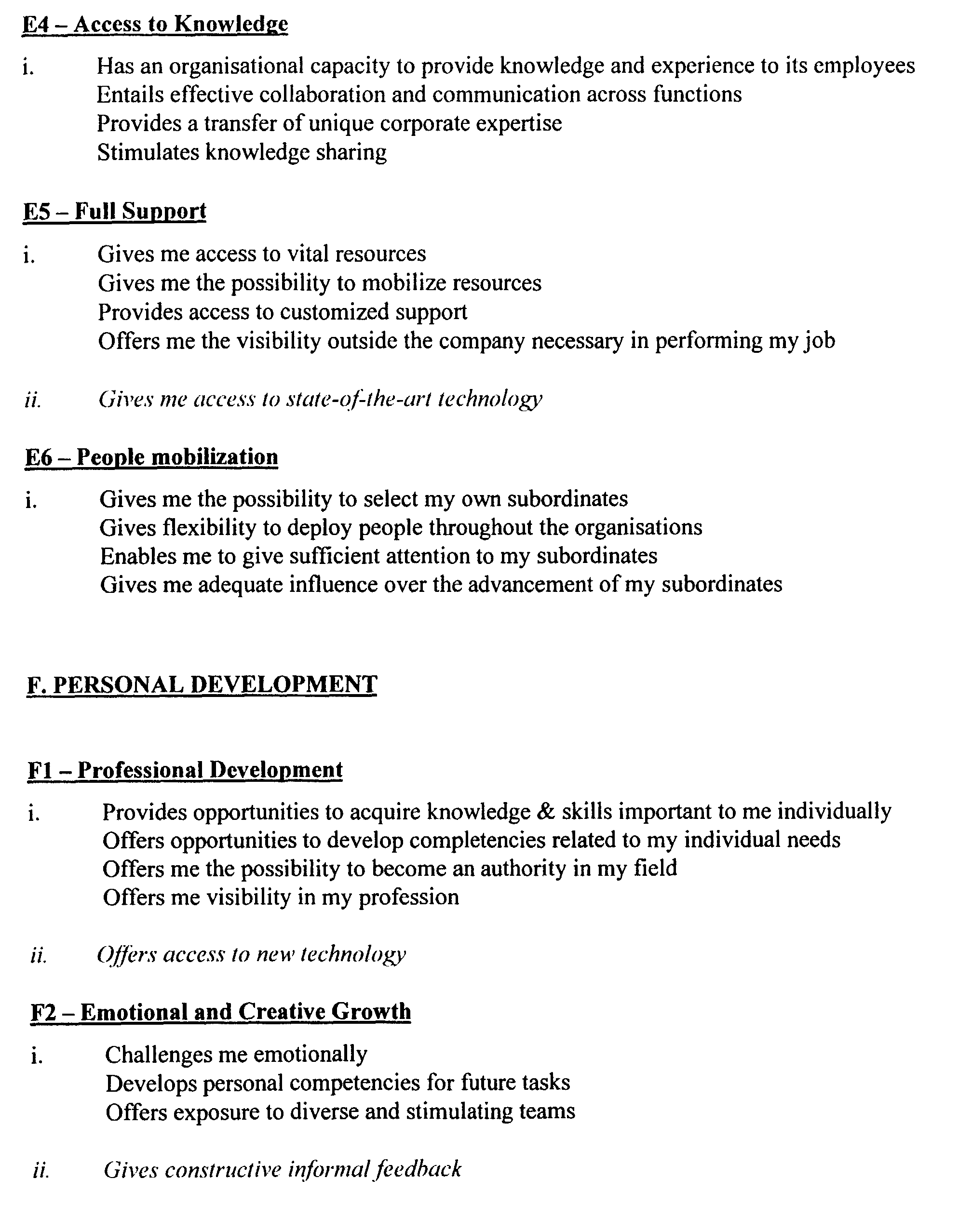

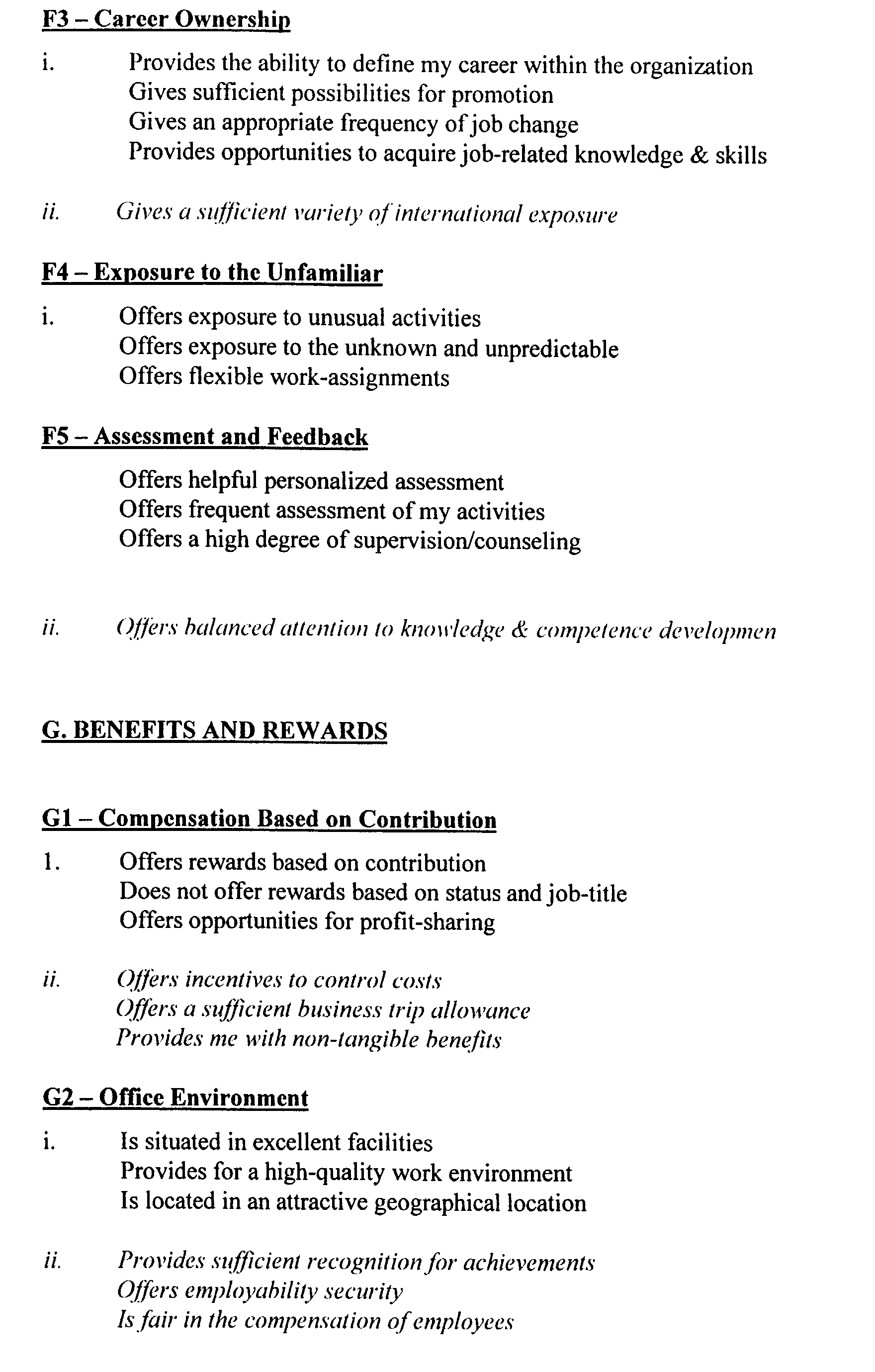

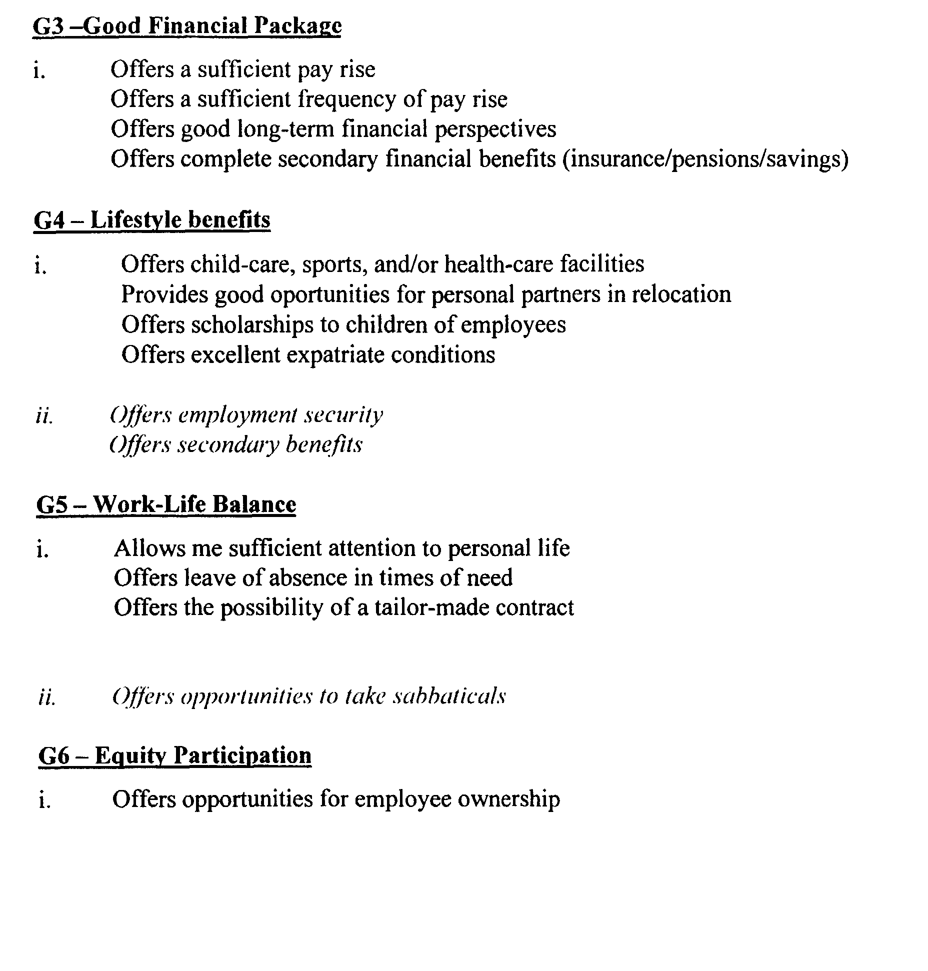

## Claims

1. A method of obtaining information from persons about a particular subject, wherein questions are put to a number of persons, characterized in that attributes which are typical of the subject are presented to a person in clusters of two or more connected attributes, wherein each cluster corresponds with a practical situation, wherein it is possible to indicate for each cluster to what extent said practical situation applies to the subject in question, wherein a description of the associated practical situation has been added to each cluster, in which description the attributes of said cluster are explained by means of a practical example.

2. A method according to claim 1, wherein said description of the practical situation can be selectively consulted.

3. A method according to claim 1 or 2, wherein it can be indicated for each cluster to what extent the practical situation characterized by the attributes corresponds with a desired situation and with the actual situation.

4. A method according to claim 3, wherein the method is repeated on a regular basis, in case of repetition within a predetermined period of time it is only possible thereby to indicate to what extent the practical situation outline by the attributes corresponds with the actual situation, whilst in case of repetition after said predetermined period of time this can be indicated both for the desired situation and for the actual situation.

5. A method according to any one of the preceding claims, wherein said questions are presented via an Internet or Intranet site, wherein a page mentioning the attributes has been created for each cluster, wherein the practical situation can be consulted by clicking on an associated designation on said page.

6. A method according to claim 5, wherein each person is given an identification code and a password, by means of which access can be gained to a personal questionnaire, wherein select buttons for the next page and/or for the preceding page are added to the pages associated with a cluster, wherein the answers that are given are registered in a memory as soon as another page is selected.

7. A method according to claim 6, wherein a select button for exiting the questionnaire has been added to a number of pages.

8. A method according to claim 5, 6 or 7, wherein a select button has been added to every page associated with a cluster, via which a glossary can be consulted, which glossary only contains terms which are used in the description of the associated attributes or the practical example.

9. A method according to claim 5, 6 or 7, wherein each page associated with a cluster contains a number of terms which are configured as select buttons, via which an explanation for the term in question can be obtained.

10. The method of claim 1 wherein the attributes are those used to describe a work situation of a target group of employees of a company.

11. A method of drawing up a set of questions for obtaining information from persons about a particular subject, characterized in that attributes which are typical of the subject are gathered, wherein it is investigated whether the attributes being gathered are connected and the connected attributes are combined in clusters, which each correspond with a practical situation, and wherein a description of a practical situation is added to each cluster, in which description the attributes of said clusters are explained by means of a practical example.

12. A method according to claim 11, wherein there are possibilities to answer for each cluster, which possibilities relate to the desired situation and to the actual situation, respectively.
